# EUROPÄISCHE PATENTSCHRIFT

(11) **EP 1 929 099 B1**
(45) Veröffentlichungstag und Bekanntmachung des Hinweises auf die Patenterteilung: **11.03.2009**
(21) Anmeldenummer: 06790910.1
(22) Anmeldetag: 21.09.2006
(51) Int. Cl.: E04C 5/07

(54) **BI-KOMPONENTEN-KUNSTSTOFF-FASERN FÜR DEN EINSATZ IN ZEMENTGEBUNDENEN BAUSTOFFEN**
BI-COMPONENT SYNTHETIC FIBRES FOR APPLICATION IN CEMENT-BONDED BUILDING MATERIALS
FIBRES SYNTHETIQUES A DEUX COMPOSANTS DESTINEES A DES MATERIAUX DE CONSTRUCTION LIES PAR DU CIMENT

(30) Priorität: 30.09.2005 CH 15822005
(43) Veröffentlichungstag der Anmeldung: 11.06.2008
(73) Patentinhaber: Eidgenössische Materialprüfungs- und Forschungsanstalt EMPA, 8600 Dübendorf (CH); Fibrotec AG, 8756 Mollis (CH)
(72) Erfinder: KAUFMANN, Josef, CH-8152 Opfikon (CH); SCHWITTER, Eugen, CH-8753 Mollis (CH)
(74) Vertreter: Luchs, Willi
(86) Internationale Anmeldenummer: PCT/CH2006/000511
(87) Internationale Veröffentlichungsnummer: WO 2007/036058

(56) Entgegenhaltungen:
- EP-A- 1 350 773
- US-B2- 6 844 065

## Beschreibung

Diese Erfindung betrifft spezielle Kunststoff-Fasern gemäß dem Anspruch 1, welche für den Einsatz in Beton mit einem Grösstkorndurchmesser von 4mm und mehr geeignet sind und dabei die Zugfestigkeit und das Nachbruchverhalten dieser Baustoffe entscheidend verbessern.

Die Zugfestigkeit von Beton ist gegenüber seiner Druckfestigkeit um ca. einen Faktor 10 geringer. Der Bruch erfolgt relativ spröde. Zur Aufnahme von Zug- oder Scherkräften am Bauwerk muss der Beton daher armiert werden. Oft stehen auch Sicherheitsüberlegungen im Vordergrund. Ein Betonbauteil soll beim Überschreiten der Maximallast nicht katastrophal und abrupt einbrechen, sondern zunächst eine gewisse Energie absorbieren, also duktiles Verhalten zeigen. Beides wird konventionell durch eine Stahlarmierung erreicht. Die Art der Armierung wird detailliert geplant und dann werden die Armierungen meist in Handarbeit aufwändig verlegt. Durch die Beimengung von kurz geschnittenen Stahlfasern kann in gewissen Fällen ganz oder teilweise auf eine konventionelle Stahlarmierung verzichtet werden. Stahlfasern haben aber entscheidende Nachteile. Sie sind korrosionsanfällig, was oft zu unschönen Roststreifen oder Flecken auf dem Beton führt. Weiter bergen sie eine Verletzungsgefahr in sich. Ausserdem weisen sie infolge ihrer Starrheit schlechte Dosier- und Mischeigenschaften auf. Infolge der grossen Dichte ergeben sich grosse Dosiergewichte, was sich auch in den Kosten niederschlägt. Das Einmischen von Stahlfasern führt aufgrund der ungleichmässigen Verteilung auch zu relativ hohen Streuungen der Materialeigenschaften. Andere Fasertypen, wie etwa Glasfasern, haben andere entscheidende Nachteile, zum Beispiel eine beschränkte Alkalibeständigkeit.

Als Alternative bietet sich die Verwendung von Kunststofffasern an. Die Fasern müssen dabei einerseits eine relativ hohe Zugfestigkeit und andererseits eine hohe Verbundfestigkeit mit dem Beton aufweisen. Im Belastungsfall soll die Haftreibung auf der ganzen Faseroberfläche wirksam bleiben, damit die Faser gleichmässig ausgezogen wird und in der Lage ist, viel Bruchenergie zu absorbieren. Preiswerte Fasertypen, insbesondere auch im direkten Vergleich mit den Stahlfasern, können auf der Basis von Polyolefinen (Polypropylen, Polyethylen) oder anderen thermoplastischen Kunststoffen hergestellt werden. Während es gelingt, damit ansehnliche Zugfestigkeiten mit zum Teil besseren Werten als mit Stahl zu erreichen, ist der E-Modul und die Verbundfestigkeit zum Beton bei diesen Fasertypen im Allgemeinen gering. Eine Verbesserung der Haftreibung kann durch eine Erhöhung des E-Moduls der Fasern, hergestellt aus relativ teuren Rohstoffen, erzielt werden.

Aus der EP 1'350'773 sind mehrschichtige thermoplastische Kunststofffasern für die Verstärkung von Beton bekannt geworden. Dort wird als speziell herausgestrichen, dass die Polymere der verschiedenen Schichten unterschiedliche Schmelzpunkte aufweisen. Das Polymer mit dem tieferen Schmelzpunkt liegt im Kern, jenes mit dem höheren im Mantel, wobei der Unterschied 10°C bis 20°C betragen soll. Diese Massnahme soll für die Reckung nach Erwärmung in einem Spezialofen dienen, indem mit der Erwärmung der äusseren Schicht die innere ebenfalls hinreichend erwärmt wird, sodass eine Reckung um den Faktor 3 bis 12 möglich wird. Durch das Recken werden die Kunststoffmoleküle längsorientiert. Dadurch wird erst die Festigkeit im Kunststoff erzielt. Zur Erhöhung der Haftkraft im Beton werden diese Kunststofffasern vor dem Recken auf ihrer Aussenseite mit Strukturen versehen. Im Einzelnen werden diese Filamente so hergestellt, dass zunächst mittels einer Koextrusion eine zwei- oder mehrlagige Folie hergestellt wird. Hernach wird diese Folie mittels Kalander mit einer Prägung versehen. Anschliessend wird die Folie in schmale Bändchen geschnitten. Am Schluss werden die flächigen Bändchen noch gereckt, wodurch die Noppen bzw. Dünn- und Dickstellen effektiv entstehen.

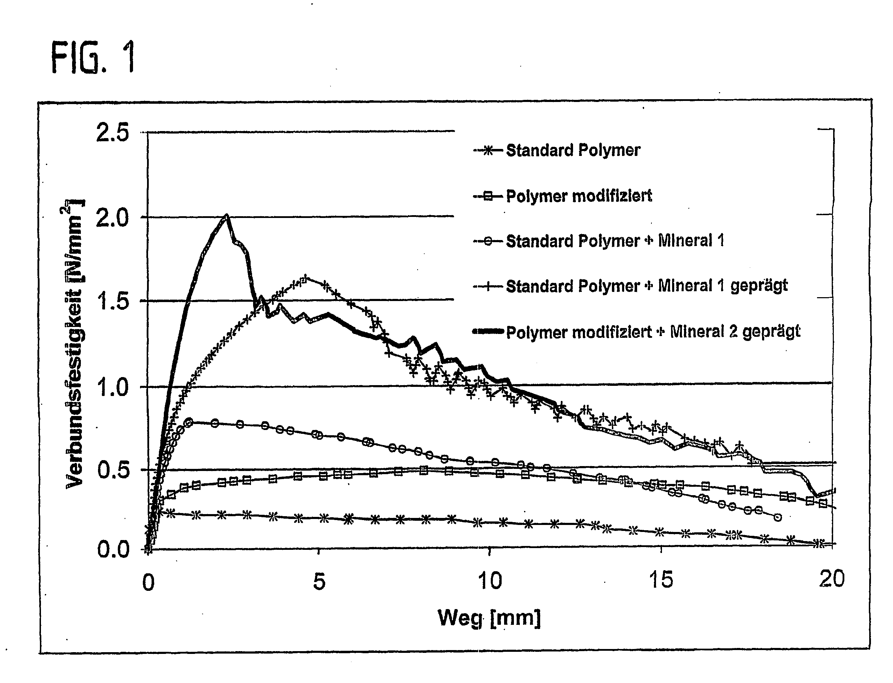

Nun ist aber wichtig festzustellen, dass das Prägen und Recken in einem zusammenhängenden Prozess zu sehen sind. Durch das Prägen in unverstrecktem Zustand wie von EP 1'350'773 A2 gelehrt, entstehen partielle Materialanhäufungen. Das Polymer, das durch die Strukturierung verdrängt wird, ist noch amorph. Wenn nachher verstreckt wird, so wird zuerst die Zone mit der kleinsten Materialanhäufung gereckt. Es ist allgemein bekannt und auch einleuchtend, dass während jedem Reckprozess zuerst die Stellen mit dem kleinsten Widerstand verstreckt werden. Das sind in diesem Fall eindeutig die Dünnstellen. Aus diesem Grund können zuvor geprägte Bändchen am Schluss, also nach einer Reckung nach erfolgter Prägung, nicht gleichmässig verstreckt sein. Es dürfte schwierig bis gar unmöglich sein, unter Wahrung guter Produktionsbedingungen, das heisst unter Vermeidung von Filamentbrüchen, derartig geprägte Filamente überhaupt vollständig zu recken. Die Dünnstellen werden vollständig gereckt sein, während bei den Dickstellen der Reckgrad und somit auch die Orientierung der Moleküle gezwungenermassen kleiner sein müssen. Dadurch sind die Noppen, die nach diesem Verfahren hergestellt werden, weicher als die anderen Stellen des Filamentes, und sie haben demzufolge einen ungenügend hohen E-Modul. Dies bedeutet, dass die Noppen - beim Ausziehen - leicht abgenutzt werden. Zudem ist es grundsätzlich nicht möglich, scharfkantige Noppen durch eine Reckung nach dem Prägen zu erhalten, da das Profil der Noppen durch das Verstrecken "verwischt" wird, was auch deutlich aus der Figur 1 von EP 1'350'773 A2 ersichtlich ist. Nachdem jede Kette so stark ist wie ihr schwächstes Glied, bringt diese Methode auch eine gewisse Materialverschwendung mit sich, da überproportional viel Polymer eingesetzt werden muss, um die gewünschten Festigkeitswerte in den Dünnstellen zu erzielen. Dies verdeutlicht Fig. 1 (A) in EP 1'350'773 A2 ebenfalls eindeutig. Mit dem Prägen vor dem Recken lassen sich nur Noppen erzielen, die einen sehr grossen Abstand zu einander aufweisen. So wird in [0041] von EP 1'350'773 A2 erwähnt, dass der Reckfaktor zwischen 3:1 zu 12:1 und vorzugsweise zwischen 5:1 zu 10:1 betragen soll. Bei einer Pyramidenprägung wie in FIG. 1 (B) dargestellt, und nach einem anschliessenden minimalen Gesamtverzug (Reckfaktor) von 5 beträgt der Abstanden von Noppe zu Noppe 5mm, bei einem Gesamtverzug von 10, was bei einem hochfesten PP oder HDPE-Filament das absolute Minimum darstellt, ergibt sich somit ein Abstand von 10 mm von Noppe zu Noppe, ohne den Prägespalt zu berücksichtigen! Die FIG. 1 (A) EP 1'350'773 A2 veranschaulicht zudem ganz deutlich das Profil der Filamente, die man durch eine Prägung vor dem Recken erhält. Die Fasern sind im Steg (Dünnstellen) überdurchschnittlich dünn. Zu den Noppen (Dickstellen) hin sind die Verdickungen kontinuierlich ansteigend und nachher wieder kontinuierlich abflachend. Es wird also durch jede Noppe gewissermassen ein beidseitiger Konus gebildet. Diese Eigenart wiederholt sich beim Verfahren, wie unter EP 1'350'773 A2 beschrieben, immer, unabhängig davon, welche Prägeart gewählt wird, ob Pyramide, Welle oder scharfkantiges Profil, einseitige oder doppelseitige Prägung. Die Noppen werden zwangsläufig stets beidseits in einem sehr spitzen Winkel auf den Durchmesser der nächsten Dünnstelle auslaufen! Das Ausgleiten aus dem Beton wird damit im Vergleich mit einer scharfen Prägung, mit markante Übergängen von den Dünn- zu den Dickstellen, wesentlich ungünstiger.

Mit dem Prägen vor dem Recken lassen sich also nur seitlich abgeflachte oder abgerundete Noppen erzielen, die einen grossen Abstand zueinander aufweisen, und ausserdem wird eindeutig eine Strukturumwandlung im Innern der Fasern in Folge der zeitlich an die Prägung anschliessenden Reckung in Kauf genommen. Während jedem Reckprozess werden zuerst die Stellen mit dem kleinsten Widerstand verstreckt. Das sind in diesem Fall eindeutig die aufgrund der Strukturierung erzeugten Dünnstellen. Daher werden die nach einer Prägung gereckten Fasern keine homogene Molekülstrukturen mehr aufweisen. Vielmehr werden die Dünnstellen vollständig gereckt sein, während bei den Dickstellen der Reckgrad und somit auch die einheitliche Orientierung der Moleküle unausweichlich kleiner ist. Es wird aus diesem Grund überproportional viel Polymer eingesetzt, um die gewünschten Festigkeitswerte in den Dünnstellen zu erzielen. Zudem sind die Dickstellen weich, was den Verbund mit dem Beton ebenfalls verschlechtert und zu einem gegenüber einer harten Polymeroberfläche vereinfachten Ausgleiten aus der Zementsteinmatrix führt.

Die Aufgabe der vorliegenden Erfindung vor diesem Hintergrund ist es, Kunststoff-Fasern für den Einsatz in zementgebundenen Baustoffen, insbesondere in Beton mit einem Grösstkorn von grösser als 4mm im Durchmesser zu schaffen, mittels derer die mechanischen Eigenschaften dieser Baustoffe wesentlich verbessert werden, indem sie eine homogene Molekülstruktur aufweisen, sowie dichtere Prägungen auf ihrer Oberfläche. Gleichzeitig sollen diese Kunststoff-Fasern praktischer in der Handhabung und im Beimengen sein, ihre Zugfestigkeit mit minimalen Massen erzielen und kostenmässig konkurrenzfähig zu Stahlfasern sein.

Die Aufgabe wird gelöst durch eine Kunststoff-Faser gemäß dem Anspruch 1.

Durch die Aufteilung in einen Kern und einen Mantel können einerseits das Mantelpolymer bezüglich der Verarbeitbarkeit (Rheologie) und der Verbundfestigkeit zwischen Faser und Beton, ferner der Steifheitsgrad, die Dimensionsstabilität und die Abriebfestigkeit und andererseits das Kernpolymer hinsichtlich einer hohen Zugfestigkeit und einer kleinen Bruchdehnung unabhängig voneinander optimiert werden. Dadurch lassen sich nicht nur Fasern mit ganz neuen, verbesserten Eigenschaften erzielen, sondern auch die Kosten reduzieren, da nicht die ganze Faser aus teuren Universalpolymeren bestehen muss, wie dies bei Vollfasern der Fall ist. Zudem ergibt sich die Möglichkeit, dass teurere Komponenten in geringerem Umfang, beispielsweise nur im Mantel, zur Anwendung gelangen. Das Mantelpolymer kann einerseits durch Prägung und andererseits durch chemische Modifikation der Oberfläche auf den gewünschten Verbund zum Zement hin optimiert werden. Dabei erweist sich die Kombination dieser beiden Massnahmen als äusserst wirkungsvoll.

In den beigefügten Zeichnungen sind verschiedene Aufbauten von Fasern gezeigt, die sich zum Einbau in zementgebundenen Baustoffen eignen, und weiter ist die Wirkung im Beton anhand von Messdiagrammen aufgezeigt.

Es zeigt:
- Figur 1:: Ein Kraft-Weg-Diagramm zur Darstellung der Verbundfestigkeit, d.h. der Kraft pro Faseroberfläche verschiedener Fasertypen in einem zementgebundenen Baustoff;
- Figur 2:: Eine intermittierend geprägte Faser mit ursprünglich rundem Querschnitt;
- Figur 3:: Eine Vorrichtung zur Prägung mit zwei parallel zueinander angeordneten Walzen, schematisch dargestellt;
- Figur 4:: Eine Prägungsart der Faser von der Seite her gesehen;
- Figur 5:: Eine weitere Prägungsart der Faser von der Seite her gesehen;
- Figur 6:: Eine geprägte Faser mit Faserkern und Fasermantel aus unterschiedlichen Materialien, mit Feinstpartikeln oder Nanopartikeln im Kern und/oder Mantelpolymer;
- Figur 7:: Ein Kraft-Weg-Diagramm zur Darstellung der unterschiedlichen Verbundfestigkeiten bei identischen Kunststoff-Fasern, wobei bei der einen Nanopartikel im Mantelpolymer eingesetzt waren;
- Figur 8:: Ein Kraft-Weg-Diagramm zur Darstellung der Verbundfestigkeit von Fasern mit Nanopartikeln und Prägung im Mantelpolymer im Vergleich zu einer Faser ohne Nanopartikel und Prägung im Mantelpolymer;
- Figur 9:: Ein einzelnes Bündel mit Tausenden von Kunststoff-Faser-Abschnitten, zum Einbringen in den zu mischenden zementgebundenen Baustoff.

Bevor auf die einzelnen Figuren eingegangen wird, werden hier einige grundsätzliche Sachverhalte erläutert: In Beton einsetzbare Fasern weisen im Gegensatz zu Fasern in Faserzementprodukten wesentlich grössere Durchmesser von 0.15 bis 2 mm auf, da sonst bei den üblichen Faserdosierungen zur mechanischen Verstärkung, das heisst im Bereich von 0.3 bis 2 Volumen-%, keine ausreichende Verarbeitbarkeit des Baustoffs erreicht werden kann. Bei derart dicken Fasern ist die Verbundfestigkeit zwischen Faser und Baustoff, insbesondere auf Basis von preiswerten niedermoduligen Polymeren wie Polyolefinen bisher ungenügend, da sich im Belastungsfall der Querschnitt der Faser verkleinert und somit die Faser leicht aus ihrer Einbettung herausschlüpfen kann. Eine Erhöhung der Verbundfestigkeit durch geeignete Polymerauswahl oder durch die Erhöhung der Haftung am Beton durch Steigerung der Oberflächenspannung der Fasern oder durch eine Corona-, Plasma- oder Fluorbehandlung oder durch das Aufbringen von Waxdispersionen oder Avivagen erweist sich bei niedermoduligen Fasern und daher auch bei Bi-Komponentenfasern als nicht ausreichend. Bei Verwendung von hochmoduligen Kunststoffen ist die Querschnittsverjüngung andererseits erst dann ausreichend reduziert, wenn die Faser grösstenteils oder ganz aus diesen teuren Rohstoffen gefertigt ist. Ganz neue Perspektive eröffnet nun aber eine gezielt mit einer geprägten Struktur versehene Bi-Komponentenfaser für den Einsatz in Beton.

Es ist bekannt, dass bei thermoplastischen Rohstoffen folgende Parameter ausschlaggebend sind, um bei Fasern höchste Festigkeitswerte bei kleiner Dehnung und einen hohen E-Modul zu erreichen: Die Polymere müssen eine tiefe MFR (Melt Flow Rate) und eine enge Molekulargewichtsverteilung aufweisen. Die Melt Flow Rate ist gemäss ISO 1133 definiert und ein Mass dafür, bei welcher Temperatur und Druckbelastung wieviel Masse pro Zeit durch eine definierte Düse strömt. Ferner muss der Reckgrad (Verstreckungsprozess nach dem Spinnen) so hoch wie nur möglich gewählt werden. Es ist aber auch bekannt, dass Fasern mit einem Durchmesser von 0.15 bis 2mm unter mechanischer Belastung in der Längsrichtung zum Aufsplittern (Fibrillieren) neigen, was sich absoiut negativ für den Verbund zwischen dem Zement und den Fasern auswirkt. Beim Ausziehen aus dem Beton werden die Fasern mechanisch sehr stark belastet und dabei kommt es - wenn das Polymer im Fabrikationsprozess bis zu seiner Reckgrenze verstreckt wurde - unweigerlich zum Fibrillieren. Polymere mit einer höheren MFR und einer breiteren Molekulargewichtsverteilung weisen während des Reckprozesses ein wesentlich gutmütigeres Verhalten auf. Das heisst Fasern, hergestellt aus solchen Polymeren, können höher verstreckt werden, bis ihre absolute Reckgrenze erreicht ist.

Üblicherweise werden Filamente, also Vollfasern, oder koextrudierte Filamente, also z.B. Kern-Mantel-Fasern, nach dem folgenden System hergestellt: Nach dem Austritt aus den Düsen, wobei jede Faser durch eine separate Bohrung ausgepresst wird, werden die unverstreckten Fibrillen in einem Wasserbad gekühlt. Die Temperatur dieses Bades ist regulierbar. Dünne Filamente kühlen schneller aus als dickere. Während des folgenden Reckprozesses durchlaufen die Filamente in einer oder mehreren Prozess-Stufen berührungslos geeignete Wärmequellen (Öfen). Dünne Filamente kühlen und erhitzen sich schneller und gleichmässiger als dickere mit z.B. 0.15 bis 2.0 mm Durchmesser. Filamente mit einer grösseren Masse speichern die Schmelzenergie im Zentrum länger. Im Wasserbad werden logischerweise die äusseren Schichten mehr als die inneren abgekühlt. Das thermische Gleichgewicht zwischen dem Faser-Zentrum und der Faser-Oberfläche wird in diesem Fall nicht durch Polymere mit unterschiedlichen Schmelzpunkten erzielt, sondern durch den thermischen Ausgleich infolge des Kühlbades und der Wärmebestrahlung infolge der Streckofentemperaturen. Die hier vorgestellten Kunststoff-Fasern werden nach diesem Standardverfahren für Filamente erzeugt. Die Schmelzpunkte beider Polymere, sowohl im Kern als auch im Mantel, können identisch aber auch unterschiedlich sein, da diese für die spätere Weiterverarbeitung an sich keine Bedeutung haben. Vorzugsweise werden aber Polymere für Kern und Mantel eingesetzt, welche das gleiche Temperaturverhalten zeigen, das heisst auf der gleichen Temperatur von ca. 165°C ihren Schmelzpunkt erreichen. Hingegen wird mit Polymeren gearbeitet, die nach Erreichen des Schmelzpunktes unterschiedliche Viskositäten zeigen, nämlich eine Melt Flow Rate (MFR) von 0.8 und 35 g/10 Min. aufweisen. Das Mantelpolymer mit 35 g/10 Min. ist - bei gleichem Schmelzpunkt - nach dem Schmelzen rund 44 Mal dünnflüssiger als das Kernpolymer. Die unterschiedlichen MFR's wirken dem Fibrillieren entgegen. Das dünnflüssigere Mantelpolymer ist reckfreudiger als das zähere Kernpolymer. Die somit nicht vollständig ausgereizte Umhüllung verhindert das Fibrillieren.

Mit dem hier vorgeschlagenen Weg, die Faser aus einem Kern und einem Mantel aus unterschiedlichen Polymeren herzustellen, eröffnen sich bessere Voraussetzungen für eine Optimierung der Faser. Das Mantelpolymer kann einerseits bezüglich der Verarbeitbarkeit (Rheologie) und der Verbundfestigkeit zwischen Faser und Beton optimiert und das Kernpolymer unabhängig davon hinsichtlich einer hohen Zugfestigkeit und einer kleinen Bruchdehnung optimiert werden. Hierzu wurde eine Kern-Mantel-Faser geschaffen, deren Kern aus Polymeren mit einer tiefen MFR und einer sehr engen Molekulargewichtsverteilung besteht, und deren Mantel aus Polymeren mit einer höheren MFR und einer breiten Molekulargewichtsverteilung besteht. Beim Reckprozess wird der Kern einer derart konstruierten Faser in Bezug auf die mechanischen Eigenschaften maximiert, indem er vollständig und homogen gereckt wird, währenddem der Mantel noch über genügend Reserven verfügt, um die Faser zuverlässig zu fixieren und dadurch das Fibrillieren unter Belastung zu verhindern. Bei einer derartigen Faser ist also der Kern gezielt für bestmögliche mechanische Werte und der Mantel für einen optimalen Verbund zum Zement konstruiert. Die vollständig, das heisst durchgehend und homogen gereckte Faser wird dann nachträglich durch Prägung mit einer Struktur versehen. Dabei wird das vollständig gereckte Polymer mit seinen längsorientierten Molekülen bloss noch seitlich oder in der Tiefe verdrängt oder umorientiert. Über das Gesamtprofil der Faser betrachtet entstehen keine schwächenden Dünnstellen.

In Versuchen wurde erhärtet, dass durch die zusätzliche Einlagerung einer Masse von 3% bis 25% feiner mineralischer Partikel die hohen Festigkeitswerte beibehalten wurden, die Bruchdehnung jedoch reduziert wurde. Für eine solche Einlagerung eignen sich metallische Salze, Glaspartikel oder -kügelchen oder Fasermaterialien aller Art. Dadurch wurde auch der E-Modul der Fasern erhöht, was bei dieser Anwendung von grossem Vorteil ist. Gleichzeitig bewirkt die Einlagerung der Mineralien, dass die Kontraktion der Fasern (Einschnürung) unter Belastung verkleinert wird, was sich wiederum positiv auf das Auszugsverhalten auswirkt.

Nachweisbar wird durch die Einlagerung funktionaler Gruppen die Oberflächenspannung des Polymers erhöht, was ebenfalls zu einem besseren Verbund zwischen den Fasern und dem Zement führt. Diese chemische Modifikation verteuert aber die Polymere. Da bei einer Kern-Mantel-Faser nur der Mantel in direkten Kontakt zum Zement gelangt, muss auch nur dieser modifiziert werden. Der Anteil des Mantels beträgt, je nach Konstruktion der Faser, ca. 20% bis 50% der Gesamt-Faser-Masse. Um den gleichen Effekt bei einer Vollfaser zu erreichen, müsste das Polymer einer derartigen Type vollumfänglich modifiziert sein.

Durch die Kombination der oben beschriebenen Massnahmen lassen sich also Fasern mit ganz neuen und wesentlich verbesserten Eigenschaften konstruieren. Ausserdem lassen sich Kosten reduzieren, da nicht die ganze Faser aus teuren Universalpolymeren bestehen muss, wie dies bei Vollfasern der Fall ist, sondern teurere Komponenten in geringerem Umfang, beispielsweise nur im Mantel, zur Anwendung gelangen. Das Mantelpolymer kann dann einerseits durch Prägung und andererseits durch eine chemische Modifikation der Oberfläche auf den gewünschten Verbund zum Zement hin optimiert werden. Dabei erweist sich die Kombination dieser beiden Massnahmen als äusserst wirkungsvoll.

Die Strukturierung der Oberfläche erfolgt vorzugsweise durch eine mechanische Prägung der Bi-Komponentenfaser. Durch den Prägevorgang werden beim geprägten Teil Rillen gebildet und gleichzeitig wird der Kunststoff seitlich verdrängt, was auch eine seitlich strukturierte Oberfläche bewirkt, was sich dann in Bezug auf die Haftung des Zements auf der Faser und deren Verzahnung mit dem Beton positiv auswirkt. Durch diese Strukturierung wird der Faserverbund zur Baustoffmatrix, selbst bei einer Verjüngung des Faserquerschnitts im Belastungsfall, also auch bei tieferen Faser E-Moduli, nicht aufgehoben.

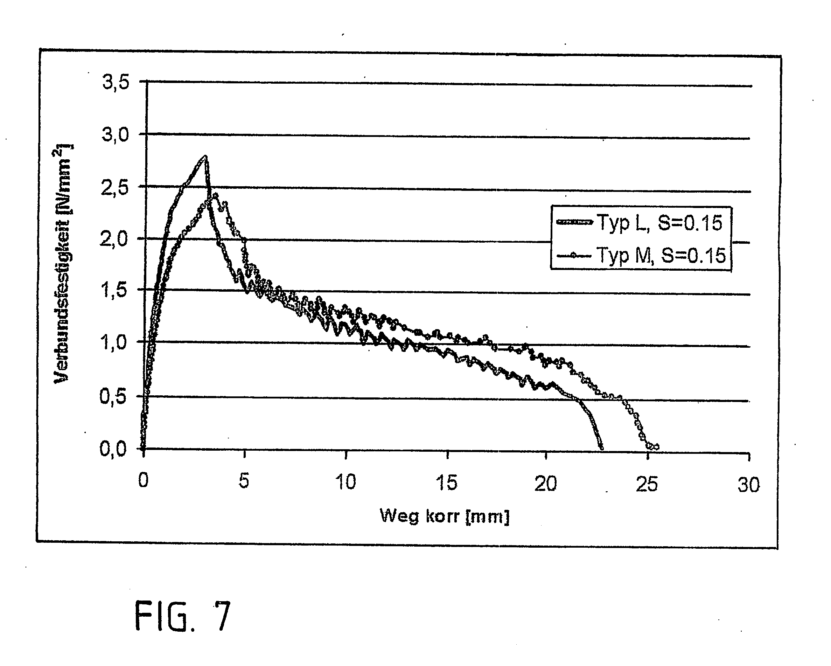

Eine weitere Verbesserung der Verbundeigenschaften zum Beton von Bi-Komponentenfasern gelingt insbesondere durch die zusätzliche Einlagerung einer Masse von 3% bis 25% feiner Nanopartikel mit einem Korndurchmesser <1µm in der Form von mineralischen Füllstoffen im Mantelpolymer. Dadurch wird bewirkt, dass der Steifheitsgrad und die Oberflächenabriebfestigkeit erhöht werden. Eine solche Faser wird in ähnlicher oder gleicher Weise mit einer Prägung versehen, um ihr eine strukturierte Oberfläche zu verleihen. Die Prägung wird durch die Einlagerung von Nanopartikeln härter und präziser. Es ergeben sich beim Faserauszug ein geringerer Auszugsweg bei gleicher Kraftübertragung und eine höhere Verbundsfestigkeit, wie das im Diagramm nach Figur 7 aufgezeigt wird. Dass diese Partikel nur im Mantelpolymer eingesetzt werden, führt zu einer entscheidenden Massen- und Kostenersparnis.

In Figur 1 sind die Ergebnisse von Ausziehversuchen im Labor dargestellt. Die allerbesten Werte zeigte dabei eine polymermodifizierte, mit Mineralien versetzte und zusätzlich geprägte Faser. Die maximale Verbundfestigkeit - gemessen an einer 7 Tage alten Probe und bei einer Einbett-Tiefe der Faser von 20mm - wurde bei 2.0 N/mm² gemessen. Das Resultat war somit mehr als doppelt so hoch wie jenes der gleichwertigen, jedoch ungeprägten Faser. Im Vergleich mit den nicht modifizierten Fasern mit ungeprägter glatter Oberfläche und ohne Einlagerung irgendwelcher Hilfsstoffe ins Polymer, war der Verbund sogar um den Faktor 8 höher. Die ungeprägten und nicht modifizierten Polymerfasern, also jene mit glatter Oberfläche, konnten vergleichsweise nur wesentlich niedrigere Zugkräfte aufnehmen. Allein die Modifizierung durch Einlagerung funktionaler Gruppen erhöht die Oberflächenspannung des Polymers, was zu einem besseren Verbund zwischen den Fasern und dem Zement führt, wie das anhand der Figur 1 aufgezeigt wird. Die Fasern verlieren wie aus dem Diagramm ersichtlich unter Last schnell an Wirkung.

Die hier vorgestellten Kunststoff-Fasern unterscheiden sich auch deutlich von jenen Produkten, bei denen allein durch die Beimischung von Mineralien oder mineralischen Bindemitteln im Kunststoff versucht wird, einen besseren Verbund zum Zement zu erzielen und dadurch eine erhöhte Ausziehkraft zu erreichen. Oft wird behauptet, dass die Zuschlagstoffe mit dem Zement eine starke, kontrollierbare Verbindung eingingen. Diese Behauptung erweist sich als nachweislich falsch. Es wurde nämlich festgestellt, dass der grösste Teil der Mineralien oder mineralischen Bindemittel im Kunststoff eingebettet ist und/oder durch Emulsionen, Waxe, Avivagen etc. auf der Oberfläche umhüllt ist und diese Zuschläge deshalb weitgehendst wirkungslos sind. Des Weiteren haben Untersuchungen auch gezeigt, dass letztendlich das günstigere Auszugsverhalten, das durch die Einlagerung von Mineralien etc. beobachtet wurde, in der Hauptsache auf die unebenere Faseroberfläche und auf die kleinere Faser-Einschnürung (Kontraktion) zurückzuführen ist.

Der Mantel der hier vorgestellten Bi-Komponentenfasern besteht aus modifizierten Polymeren, die in Bezug auf Adhäsion zu Zement und Verarbeitungseigenschaften (Rheologie) optimiert sind. Durch die Einlagerung funktionaler Gruppen (zum Beispiel Maleinsäureanhydrid oder ähnlich funktionierende Chemikalien/Wirkstoffe) im Mantelpolymer kann die Oberflächenspannung der Faser erhöht werden, was wiederum zu einer verbesserten Benetzbarkeit desselben und zu einem besseren Verbund zwischen Zement und Faser führt. Kern-Mantel-Fasern mit einem Durchmesser zwischen 0.35 und 0.5 mm erwiesen sich in Versuchen als besonders vorteilhaft. Das Massenverhältnis zwischen Kern und Mantel liegt zwischen 50% / 50% und 80% / 20%. Als günstig hat sich ein Korndurchmesser von <1µm erwiesen. Vorteilhaft erwiesen sich als Kern polyolefine Rohstoffe, PP und HDPE sowie Mischungen aus diesen beiden Polymeren. Der Mantel einer solchen Faser wird dann zusätzlich mit einer Prägung versehen, um ihm eine strukturierte Oberfläche zu verleihen.

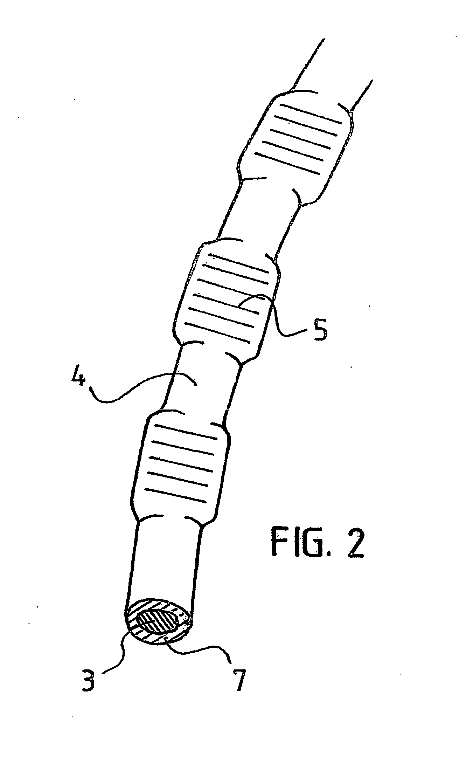

Die Figur 2 zeigt eine Kern-/Mantel-Faser aus Kunststoff. Diese Faser besteht aus polyolefinen Materialien, das heisst aus Polypropylen, Polyethylen oder Mischungen daraus oder anderen thermoplastischen Rohstoffen. Diese Faser weist einen Durchmesser von 0.15 bis 2mm auf. Sie weist einen Kern 3 aus einem Polypropylen, Polyethylen oder Mischungen daraus oder anderen thermoplastischen Rohstoffen auf, und einen diesen Kern 3 umhüllenden Mantel 7 aus anderen polyolefinen Rohstoffen wie PP, HDPE oder Mischungen aus diesen beiden Polymeren. Die Herstellung dieser bi-komponentigen Faser erfolgt im Extrudierverfahren. Eine solche Faser kann einen kreisrunden Querschnitt haben, aber auch einen davon abweichenden Querschnitt, also zum Beispiel ellipsoidisch, quadratisch, rechteckig, knochen- oder sternförmig, oder jegliche andere Form. Als Besonderheit ist die Faser auf ihrer Oberfläche durchwegs oder intermittierend mit einer mechanischen Strukturierung 5 versehen, während sie in den Bereichen 4 zwischen den Strukturierungen 5 blank bleibt. An den geprägten Stellen erfuhr die Faser eine gewisse zusätzliche Abplattung und ist dort deshalb etwas breiter, mit einem länglich/ovalen Querschnitt. Im gezeigten Beispiel ist diese Strukturierung 5 durch eine Prägung erzeugt worden. Diese mechanische Strukturierung hat zum Ziel, die Oberfläche makroskopisch zu profilieren, um dadurch die Haftreibung zwischen dieser Bi-Komponentenfaser und dem zementartigen Baustoff, in welchen sie beigemengt wird, zu erhöhen. Die Prägung als Mittel hierzu erweist sich als besonders, ja überraschend vorteilhaft. Erstens ist eine Prägung verhältnismässig einfach und kostengünstig auf eine Faseroberfläche aufzubringen und zweitens wird damit die Oberfläche wohl makroskopisch, nicht aber mikroskopisch profiliert, bleibt also innerhalb der Struktur gewissermaßen glatt und intakt. Durch eine solche Prägung können Rillen erzeugt werden, die quer zur Faser verlaufen, oder aber auch Rillen, die schiefwinklig zur Faser verlaufen. Es können Kombinationen solcher Rillenstrukturen geprägt werden, etwa mit quer zur Faser verlaufenden Rillen, die von schiefwinklig dazu verlaufenden Rillen überlagert werden. Es können aber auch ausschliesslich je schiefwinklig zur Faser verlaufende Rillen einander kreuzen. Werden solche Fasern in Schnittlängen von ca. 10 bis 80mm in einen zementartigen Baustoff, insbesondere in Beton vergossen, so wird - durch den verbesserten Faser-Matrixverbund - dessen Zugfestigkeit erhöht und das Nachbruchverhalten entscheidend verbessert. Infolge der grossen Flexibilität der Kunststoffe lassen sich grössere Faservolumenanteile als mit Stahlfasern problemlos einmischen. Die Dichte solcher Fasern von nur ca. 0.9 - 1.1 g/cm³ ist im Vergleich zur Dichte von Stahl, die 7.8 g/cm³ beträgt, um ca. den Faktor 8 geringer. Daher ergeben sich insgesamt mit den hier beschriebenen Kunststoff-Bi-Komponenten-Faser-Typen, bei gleicher Leistung gegenüber Stahlfasern, gewichtsmässig wesentlich geringere Dosiermengen und homogenere Materialcharakteristiken.

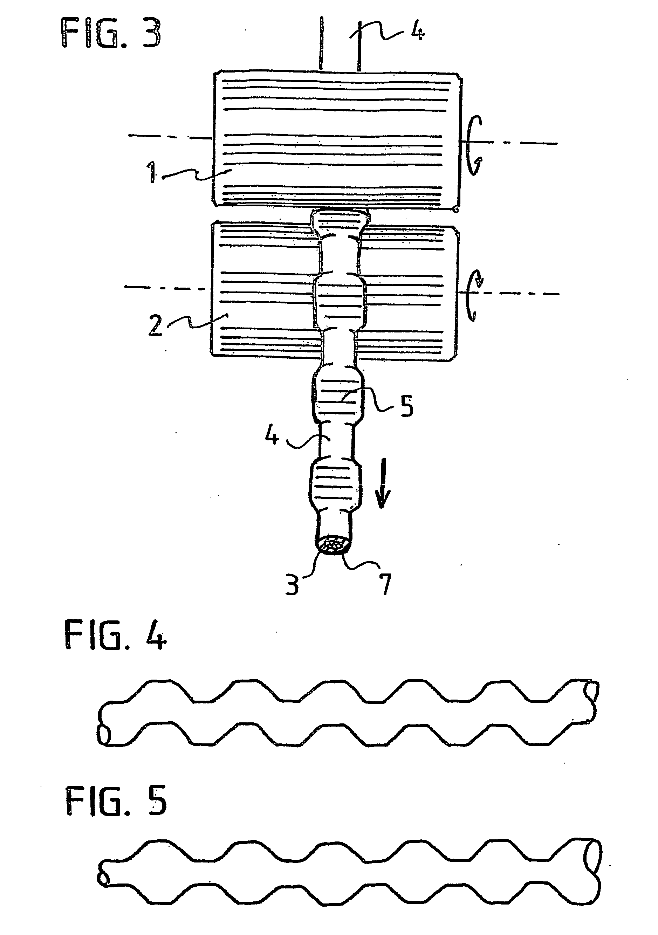

Die Prägung der Bi-Komponentenfasern kann in einfachster Weise dadurch erfolgen, dass die Faser endlos zwischen zwei Prägewalzen 1,2 durchläuft und hernach in Abschnitte der gewünschten Länge geschnitten wird, wie das anhand einer Anordnung für diese Prägung in Figur 3 schematisch dargestellt ist. Durchgehende oder unterbrochene bzw. intermittierende Prägungen 5 werden durch die Beschaffenheit der Prägewalzen 1,2 und deren Einstellung (Prägung Rippe auf Rippe oder versetzt) erzielt. Die Walzen 1,2 weisen also an gewissen Stellen eine Prägung auf, an andern wiederum nicht. Die Prägetiefe soll in jedem Fall grösser als 10% des mittleren Faserdurchmessers ausmachen.

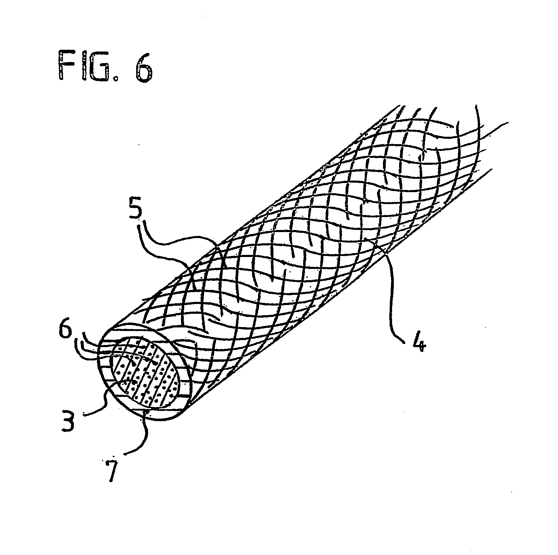

In Figur 4 ist eine andere Prägungsart der Faser von der Seite her gesehen gezeigt. Hier ist die Bi-Komponentenfaser durch zwei nach Art von Zahnrädern zueinander mit Abstand der gewünschten Faserstärke zueinander laufenden Prägewalzen durchgelaufen. Entsprechend wurde die Faser in eine Zick-Zack-Form geprägt, während die in Figur 5 gezeigte Faser zwischen zwei Prägewalzen durchlief, die ebenfalls zahnradartig geformt sind, jedoch so zueinander laufen, dass die Zähne jeweils mit wenig Abstand aufeinander treffen, sodass nur dort, wo diese zusammentreffen, die durchlaufende Faser gequetscht wird. Es bildet sich dann eine Faser mit sich ständig ändernder Form der Querschnittsfläche. In Figur 6 ist eine durchgehend geprägte Faser mit Faserkern 3 und Fasermantel 7 aus unterschiedlichen Materialien dargestellt. Die Strukturrillen 5 umfassen die ganze Faseroberfläche, bloss in den Bereichen 4 zwischen den Rillen 5 ist die Faser weiterhin glatt. Der Kern 3 kann ausserdem mit Mikro- und Nanopartikeln 6 in Form von mineralischen Füllstoffen, metallischen Salzen, Glaspartikeln oder - kügelchen oder Fasermaterialien aller Art durchsetzt sein, was bewirkt, dass die Reduktion des Faserdurchmessers unter Zugbelastung verkleinert und die Bruchdehnung vermindert wird. Dadurch gelingt es, den E-Modul dieser Fasern weiter zu erhöhen, was zu einer Steigerung der Verbundfestigkeiten führt und ein gleichmässiges Auszugverhalten aus dem Baustoff ergibt.

Vorzugsweise ist das Mantelpolymer 7 mit mineralischen Nanopartikeln versetzt, das heisst mit solchen von einem Durchmesser kleiner als 1µm. Diese Massnahme dient allerdings nicht zum direkten Verbessern der Adhäsion zwischen den Fasern und dem Beton, da die meisten mineralischen Partikel vollständig von Kunststoff umhüllt sind. Das wird vornehmlich durch chemische Verbindungen, zum Beispiel durch die Einlagerung von Zement oder durch mineralische Partikel ins Polymer oder durch einen mechanischen Effekt bewirkt, etwa durch eine rauhere Oberflächenbeschaffenheit. Durch das Einbringen von Nanopartikeln in das Mantelpolymer wird aber eine härtere Oberfläche erzielt. Dadurch wird der Verbund zum Zement - nach dem Prägen - besser. Die Kraftaufnahme erfolgt schneller und es kann mehr Kraft aufgenommen werden. Es wird ein kleinerer Oberflächenabrieb beim Faserauszug erreicht. Deshalb stellt man einen grösseren und länger anhaltenden Auszugswiderstand über die geforderte Distanz von 3 mm Durchbiegung des Prüfkörpers fest. Die Fasern sind steifer, weil für den Steifheitsgrad vornehmlich die äussere Hülle verantwortlich ist. Dadurch erhält man einen höheren E-Modul und eine kleinere "Einschnürung" (Verjüngung) beim Auszug/Belastung, was sich auf den Verbund wiederum positiv auswirkt. Die Höchstzugkraft wird durch das Einlagern von Fremdpartikeln hingegen im Allgemeinen reduziert. Bei einem Massenverhältnis von 70% Kern und 30% Mantel wird diese Abminderung der Zugkraft lediglich in den 30% des Mantel-Polymers wirksam. Diese Verhältnisse gehen aus der Figur 7 hervor. Gezeigt sind hier die Festigkeitswerte zweier identischer Kunststoff-Polymere, mit dem einzigen Unterschied, dass beim Typ L der Mantel mit Nanopartikeln veredelt war, während der Mantel des Typs M unbehandelt war. Dieses Einlagern von mineralischen Stoffen ausschliesslich im Mantel bringt auch kommerzielle Vorteile. Ein Polymer, welches eingelagerte Nano-Partikel enthält, ist zwischen 3 und 4 Mal teurer als Standardpolymere. Es ist also ein wesentlicher Unterschied ob - bei einer Vollfaser - 100% des Polymers mit diesen Spezialprodukten veredelt werden muss, oder nur der Mantel, mit etwa 30% Massenanteil am Gesamtprodukt.

Bei einer spezifischen Prägung, die sich als vorteilhaft erwiesen hat und die auch bei den relativ kurzen Faserlängen erforderlich ist, beträgt der Abstand von Spitze zu Spitze gerade mal 0.65 mm. Eine Prägung mit geringen Abständen erhöht die Homogenität der Armierung und deren Auszugskräfte. Die Filamente sind vor dem Prägen in Bezug auf ihre innere Struktur bereits fertig gestellt. Das Profil der Prägewalzen kann 1:1 auf die Filamente übertragen werden und entsprechend kann die Strukturierung der Filament-Oberfläche leicht den technischen Anforderungen angepasst werden. Je nach Wunsch können andere Prägwalzen eingesetzt werden, zur Erzeugung kleiner oder grosser Noppen, eckiger order rundlicher Noppen, solcher mit kleinem oder grossem Abstand, mit grossen oder kleinen Wellen etc. Eine derartige Flexibilität in der Herstellung ist mit Filamenten, die verfahrensgemäss erst nach der Prägung gereckt werden, nicht denkbar. Als sehr wesentlich erweist sich also, dass die vollständig und homogen gereckten und im Durchmesser identischen Filamente erst nachträglich geprägt werden. Dadurch wird das vollständig gereckte und längsorientierte Polymer lediglich seitlich und oder in die Tiefe verdrängt und umorientiert, während seine Struktur erhalten bleibt. Schwächende Dünnstellen mit schwacher Polymerstruktur werden vermieden.

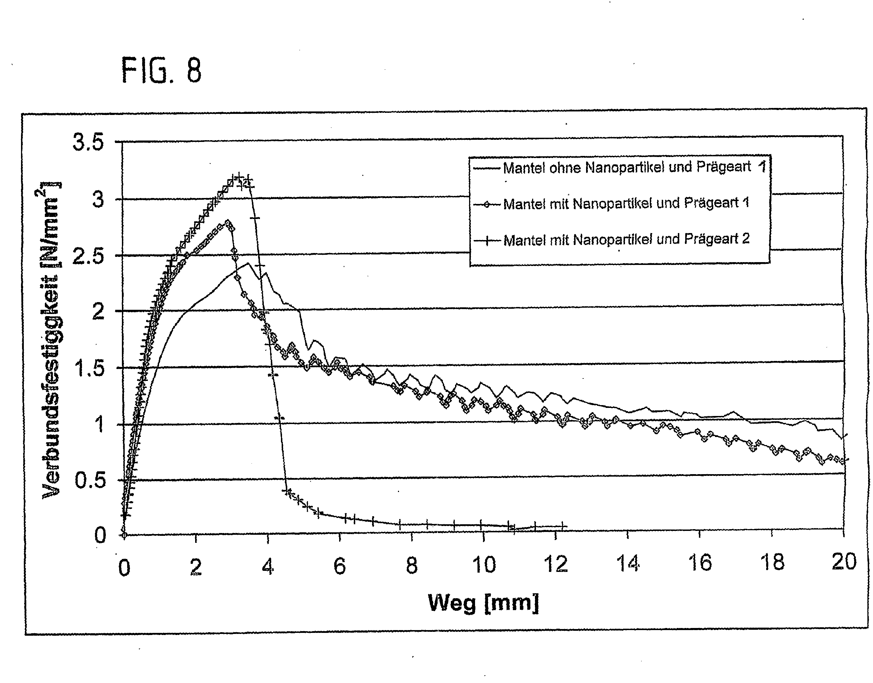

Die Figur 8 zeigt ein Kraft-Weg-Diagramm zur Darstellung der Verbundfestigkeit, d.h. der Kraft pro Faseroberfläche zweier verschieden geprägter Fasertypen mit Nanopartikel im Mantelpolymer, im Vergleich zur gleichen Faser ohne Prägung und ohne Nanopartikel im Mantelpolymer. Es hat sich gezeigt, dass mit einer Kombination von geeigneter Prägung und dem Einsatz von Nanopartikeln im Mantelpolymer die besten Resultate erzielt werden. So wurde hier ein Spitzenwert von 3.17 N/mm2 erzielt.

Um die gewünschten mechanischen Eigenschaften zu erzielen, werden üblicherweise in zementgebundenen Baustoffen ca. 0.3 Vol.-% Stahlfasern beigegeben. Im Fall der hier vorgestellten Bikomponenten-Kunststoff-Fasern verwendet man 0.5 Volumen-%, was aber letztlich eine 4.8 mal geringere Massenzugabe ergibt, bei erst noch wesentlich verbesserten und regelmässigeren Nachbrucheigenschaften. Ausserdem ist die Handhabung solch leichter Kunststoff-Faserabschnitte von 10 bis 80mm Länge an und für sich viel einfacher als jene von Stahlfasern. Eine Korrosionsgefahr besteht mit diesen Kunststoff-Fasern überhaupt nicht, wie das sonst bei Stahlfasern der Fall ist. Die hier beschriebenen Kunststoff-Fasern sind ausserdem alkalibeständig.

Schliesslich ist es nicht nur die Kunststoff-Faser selbst, die ausschlaggebend ist für einen technisch sinnvollen Einsatz in Beton. Am Schluss muss die Faser ja in geeigneter Form in den Beton eingebracht werden, um dort ihre Wirkung zu entfalten. Die beste Faser nützt nichts, wenn keine homogene Verteilung im Beton erzielt werden kann. Werden die Fasern etwa lose in den Beton eingebracht, etwa eingeblasen oder haufenweise eingestreut, so bilden sich oftmals Nester von Fasern, in welche der Beton nicht vollständig eindringt. Diese Faseranhäufungen verschlechtern die Festigkeit und die Regelmässigkeit des Betons.

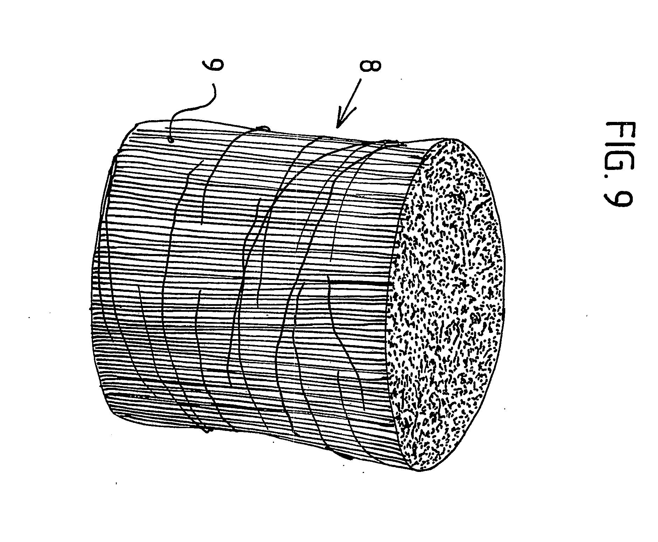

Eine überraschend wirksame Lösung wurde darin gefunden, einige Tausend Fasern als Bündel mit einer wasserlöslichen Kunststoff-Folie zu umwinkeln und dann Abschnitte bzw. Bündel abzuschneiden. Die Figur 9 zeigt ein solches Bündel 8, um davon eine Vorstellung zu geben. Es misst ca. 50mm in der Länge und im Durchmesser, wiegt 55 Gramm und enthält 6000 Fasern und ist von einer durchsichtigen, wasserlöslichen und inerten Kunststoff-Folie 9 umschlossen, unten und oben jedoch offen und dort in einer Ebene abgeschnitten. Diese Bündel 8 werden fortan von dieser Kunststoff-Folie zuverlässig zusammengehalten. Erst nach Einbringen in den Beton löst sich die Folie auf und die Fasern verteilen sich im Beton. Die einzelnen Fasern kleben aber nicht aneinander, sondern werden nur durch Reibung zusammengehalten. Dadurch ergibt sich beim Auflösen der umhüllenden Folie eine rasche Verteilung der Fasern im Beton. In solchen Bündeln 8 sind dann die Fasern alle gleich ausgerichtet. Es können problemlos bis zu 2.0-Volumen-% Fasern zum Beton beigemengt werden. Die Parallellage der Fasern in den Bündeln ermöglicht eine homogene Verteilung. Die Wickelfolie ist komplett wasserlöslich und ausserdem inert. Sie beeinflusst die Betonqualität erwiesenermassen nicht. Bei einem Faseranteil im Beton von 4.5 kg Fasern (0.5-Vol.-% oder 492'000 Einzelfasern) müssen lediglich 82 Stück solche Faserbündel 8 eingebracht werden. Im Gegensatz zu einer Verpackung in Säcklein wird in diesen Bündeln kaum Luft eingeschlossen, wodurch sie beim Einbringen in den Beton nicht aufschwimmen und so wesentlich besser vermischt werden können. Beim Mischen des Betons verteilen sich die Bündel, fallen auseinander, jedoch verhaken sich die Fasern nicht, sondern sie werden einzeln innig vom Beton umschlossen. Diese Aufmachung der Kunststoff-Fasern hat aber auch noch beträchtliche kommerzielle Vorteile: Sie sind wesentlich kompakter als die Gebinde von losen Fasern. 4.5 kg Fasern benötigen Kartons von nur rund 0.015 m³ Inhalt. Die Verpackungen sind rechteckig. Deshalb bieten sie gute Stapelmöglichkeiten auf standardisierten Paletten. Die kompakte Form bringt Ersparnisse auch beim Transport.

## Patentansprüche

1. Kunststoff-Faser für den Einsatz in Beton mit Grösstkorndurchmessern >4mm, mit einem mittleren Durchmesser von 0.15 bis 2 mm, entsprechend ca. 160 bis 28'000 dtex (Dezitex = Gramm pro 10'000 Laufmeter), wobei sie eine mittels eines Co-Extrudierverfahrens aus einem zentralen Kern und einem diesen umhüllenden Mantel aus unterschiedlichen reinen Polymeren oder Polymermischungen hergestellte, um den Faktor 5 bis 15 gereckte Bi-Komponentenfaser ist, und wobei auf diese durchgehend gereckte Bi-Komponentenfaser eine durchgehend oder unterbrochen strukturierte oder gerillte Oberfläche aufgeprägt ist, wobei die Tiefe dieser Strukturierung mehr als 10% des mittleren Faserdurchmessers beträgt und die Maximalabstände ihrer Strukturspitzen innerhalb angebrachter Strukturen in axialer Richtung im Bereich zwischen 0.5mm und 3mm liegen, **dadurch gekennzeichnet, dass** auf diese durchgehend gereckte Bi-komponentenfaser nach erfolgter Reckung die durchgehend oder unterbrochen strukturierte oder gerillte Oberfläche aufgeprägt ist.

2. Kunststoff-Faser für den Einsatz in Beton mit Grösstkorndurchmessern >4mm nach einem der vorangehenden Ansprüche, ***dadurch gekennzeichnet,* dass** die Faser eine polyolefine Faser ist, das heisst aus Polypropylen oder Polyethylen oder aus Mischungen dieser Rohstoffen besteht, oder aus anderen thermoplastischen Rohstoffen gefertigt ist.

3. Kunststoff-Faser für den Einsatz in Beton mit Grösstkorndurchmessern >4mm nach einem der vorangehenden Ansprüche, ***dadurch gekennzeichnet,* dass** deren Kern (3) aus Polymeren mit einer tiefen Melt Flow Rate (MFR) bzw. Schmelzausflussrate und einer engen Molekulargewichtsverteilung besteht, und deren Mantel (7) aus Polymeren mit einer höheren MFR und einer breiteren Molekulargewichtsverteilung besteht.

4. Kunststoff-Faser für den Einsatz in Beton mit Grösstkorndurchmessern >4mm nach einem der vorangehenden Ansprüche, ***dadurch gekennzeichnet,* dass** die strukturierte Oberfläche eine ein- oder mehrseitige mechanische Prägung (5) ist, welche rechtwinklig, diagonal, kreuzend oder von jeglicher andere Form ist.

5. Kunststoff-Faser für den Einsatz in Beton mit Grösstkorndurchmessern >4mm nach einem der vorangehenden Ansprüche, ***dadurch gekennzeichnet,* dass** mineralische, metallische oder keramische Partikel (6) in der Form von Füllstoffen, Salzen, Glaspartikeln, Glaskügelchen oder Fasermaterialien in den Kernpolymer (3), den Mantelpolymer (7) oder in beide Polymere (3,7) eingelagert sind.

6. Kunststoff-Faser für den Einsatz in Beton mit Grösstkorndurchmessern >4mm nach einem der vorangehenden Ansprüche, ***dadurch gekennzeichnet,* dass** im Mantelpolymer (7) 3 Massen-% bis 25 Massen-% feine mineralische Nanopartikel mit einem Korndurchmesser von ≤ 1µm eingelagert sind.

7. Kunststoff-Faser für den Einsatz in Beton mit Grösstkorndurchmessern >4mm nach einem der vorangehenden Ansprüche, ***dadurch gekennzeichnet,* dass** funktionale Gruppen ins Mantelpolymer (7) eingelagert sind, zur Vergrösserung der Oberflächenspannung und Polarität der Fasern.

8. Kunststoff-Faser für den Einsatz in Beton mit Grösstkorndurchmessern >4mm nach einem der vorangehenden Ansprüche, ***dadurch gekennzeichnet,* dass** sie in Bündeln (8) von mehreren Tausend Abschnitten aufgemacht ist, die mit einer wasserlöslichen Kunststoff-Folie (9) umwinkelt sind und von dieser zusammengehalten sind.

9. Kunststoff-Faser für den Einsatz in Beton mit Grösstkorndurchmessern >4mm nach einem der vorangehenden Ansprüche, ***dadurch gekennzeichnet,* dass** sie in dichten Bündeln (8) von mehreren Tausend Abschnitten aufgemacht ist, mit Schnittlängen von 10mm bis 80mm, wobei die Bündel beidseits eben abgeschnitten sind und von einer wasserlöslichen, inerten Kunststoff-Folie (9) umwinkelt zusammengehalten sind.

10. Verwendung einer Kunststoff-Faser für den Einsatz in Beton mit Grösstkorndurchmessern >4mm nach einem der vorangehenden Ansprüche, ***dadurch gekennzeichnet,* dass** sie in Bündeln (8) von mehreren Tausend Abschnitten mit Schnittlängen von 10mm bis 80mm, wobei diese Bündel (8) mit einer wasserlöslichen Kunststoff-Folie (9) umwinkelt sind, in den zementgebundenen Baustoff zugegeben und mit ihm vermischt werden.

## Claims

1. Plastic fibre for the application in concrete with largest grain diameters >4mm, with an average diameter of 0.15 to 2 mm, corresponding to approx. 160 to 28'000 dtex (Dezitex = gram per 10'000 running metres), whereby it is a bi-component fibre, which is stretched by the factor 5 to 15 and is manufactured by way of a co-extrusion method from a central core and a casing which envelops this, of differently pure polymers or polymer mixtures, and whereby a continuously or interruptedly structured or grooved surface is embossed onto this continuously stretched bi-component fibre, whereby the depth of this structuring is more than 10% of this average fibre diameter, and the maximal distances of their structure tips within incorporated structures in the axial direction lie in the region between 0.5 mm and 3 mm, **characterised in that** the continuously or interruptedly structured or grooved surface is embossed onto this continuously stretched bi-component fibre after the stretching has been effected.

2. Plastic fibre for the application in concrete with largest grain diameters >4mm, according to one of the preceding claims, **characterised in that** the fibre is a polyolefin fibre, which means it consists of polypropylene or polyethylene or of mixtures of these raw materials, or is manufactured of other thermoplastic raw materials.

3. Plastic fibre for the application in concrete with largest grain diameters >4mm, according to one of the preceding claims, **characterised in that** its core (3) consists of polymers with a low melt flow rate (MFR) and of a narrow molecular weight distribution, and its casing (7) consists of polymer with a higher MFR and of a broader molecular weight distribution.

4. Plastic fibre for the application in concrete with largest grain diameters >4mm, according to one of the preceding claims, **characterised in that** the structured surface is a single- or multi-sided mechanical embossing (5), which is right-angled, diagonal, crossing and of any other shape.

5. Plastic fibre for the application in concrete with largest grain diameters >4mm, according to one of the preceding claims, **characterised in that** mineral, metallic or ceramic particles (6) in the form of fillers, salts, glass particles, small glass balls or fibre materials are incorporated into the core polymer (3), the casing polymer (7) or into both polymers (3, 7).

6. Plastic fibre for the application in concrete with largest grain diameters >4mm, according to one of the preceding claims, **characterised in that** 3% by mass to 25% by mass of fine mineral nanoparticles with a grain diameter of ≤ 1 µm are incorporated in the casing polymer (7).

7. Plastic fibre for application into concrete with largest grain diameters > 4mm, according to one of the preceding claims, **characterised in that** functional groups are incorporated into the casing polymer (7), for increasing the surface tension and polarity of the fibres.

8. Plastic fibre for the application in concrete with largest grain diameters >4mm, according to one of the preceding claims, **characterised in that** it is packaged in bundles (8) of several thousand sections which are wrapped with a water-soluble plastic film (9) and are held together by this.

9. Plastic fibre for the application in concrete with largest grain diameters >4mm, according to one of the preceding claims, **characterised in that** it is packaged in compact bundles (8) of several thousand section, with section lengths of 10 mm to 80 mm, wherein the bundles on both sides are off in a plane manner, and are held together by a water-soluble, inert plastic film (9).

10. Use of a plastic fibre for the application in concrete with largest grain diameters >4mm, according to one of the preceding claims, **characterised in that** they are in bundles (8) of several thousand sections with section lengths of 10 mm to 80 mm, wherein these bundles (8) are wrapped with a water-soluble plastic film (9), into which cement-bonded building material is added and mixed with it.

## Revendications

1. Fibre synthétique pour usage dans du béton, d'un diamètre granulaire maximal 4 mm, d'un diamètre moyen de 0,15 à 2 mm, ce qui correspond à environ 160 à 28 000 dtex (décitex = gramme pour 10 000 mètres courants), dans laquelle il s'agit d'une fibre à deux composants fabriquée par un procédé de coextrusion à partir d'un noyau central et d'une enveloppe enrobant celui-ci en différents polymères purs ou mélanges de polymères, et étirée d'un facteur 5 à 15, et dans laquelle une surface texturée ou striée continue ou discontinue est imprimée sur cette fibre à deux composants étirée en continu, dans laquelle la profondeur de cette texture représente plus de 10 % du diamètre moyen de la fibre et les distances maximales de ses sommets au sein des textures appliquées se situent, dans la direction axiale, dans la plage de 0,5 mm à 3 mm, **caractérisée en ce que** la surface texturée ou striée continue ou discontinue est imprimée sur cette fibre à deux composants étirée en continu une fois l'étirage achevé.

2. Fibre synthétique pour usage dans du béton d'un diamètre granulaire maximal > 4 mm selon la revendication 1, **caractérisée en ce que** la fibre est une fibre polyoléfinique, c'est-à-dire qu'elle est constituée de polypropylène ou de polyéthylène ou de mélanges de ces matières premières ou qu'elle est fabriquée à partir d'autres matières premières thermoplastiques.

3. Fibre synthétique pour usage dans du béton d'un diamètre granulaire maximal > 4 mm selon l'une quelconque des revendications précédentes, **caractérisée en ce que** son noyau (3) est constitué de polymères ayant un faible débit à chaud (Melt Flow Rate ou MFR) et une étroite distribution de poids moléculaires et dont l'enveloppe (7) est constituée de polymères avec un MFR supérieur et une distribution de poids moléculaires plus large.

4. Fibre synthétique pour usage dans du béton d'un diamètre granulaire maximal > 4 mm selon l'une quelconque des revendications précédentes, **caractérisée en ce que** la surface texturée est une impression mécanique (5) sur une ou plusieurs faces, qui présente une forme perpendiculaire, diagonale, croisée ou autre quelconque.

5. Fibre synthétique pour usage dans du béton d'un diamètre granulaire maximale > 4 mm selon l'une quelconque des revendications précédentes, **caractérisée en ce que** des particules minérales, métalliques ou céramiques (6) sont incorporées sous forme de matériaux de charge, de sels, de particules de verre, de petites billes de verres ou de matériaux fibreux au polymère du noyau (3), au polymère de l'enveloppe (7) ou aux deux polymères (3, 7).

6. Fibre synthétique pour usage dans du béton d'un diamètre granulaire maximal > 4 mm selon l'une quelconque des revendications précédentes, **caractérisée en ce que** de fines nanoparticules minérales de 3 à 25 % en masse ayant un diamètre granulaire ≤ 1 µm sont incorporées au polymère de l'enveloppe (7) .

7. Fibre synthétique pour usage dans du béton d'un diamètre granulaire maximal > 4 mm selon l'une quelconque des revendications précédentes, **caractérisée en ce que** des groupements fonctionnels sont incorporés au polymère de l'enveloppe (7) pour augmenter la tension superficielle et la polarité des fibres.

8. Fibre synthétique pour usage dans du béton d'un diamètre granulaire maximal > 4 mm selon l'une quelconque des revendications précédentes, **caractérisée en ce qu'**elle se présente en paquets (8) de plusieurs milliers de sections qui sont enroulés dans une feuille synthétique hydrosoluble (9) et qui sont maintenus par celle-ci.

9. Fibre synthétique pour usage dans du béton d'un diamètre granulaire maximal > 4 mm selon l'une quelconque des revendications précédentes, **caractérisée en ce qu'**elle se présente en paquets compacts (8) de plusieurs milliers de sections, avec des longueurs de coupe de 10 à 80 mm, dans laquelle les paquets sont coupés des deux côtés en plan et sont enroulés et retenus par une feuille synthétique inerte hydrosoluble (9).

10. Utilisation d'une fibre synthétique pour usage dans du béton d'un diamètre granulaire maximal > 4 mm selon l'une quelconque des revendications précédentes, **caractérisée en ce qu'**elle se présente en paquets (8) de plusieurs milliers de sections, avec des longueurs de coupe de 10 à 80 mm, dans laquelle ces paquets (8) sont enroulés dans une feuille synthétique hydrosoluble (9), ajoutés au matériau de construction lié par un ciment et mélangés à celui-ci.
